# EUROPEAN PATENT APPLICATION

(11) **EP 1 385 105 A1**
(43) Date of publication of application: **28.01.2004**
(21) Application number: 01956806.2
(22) Date of filing: 08.08.2001
(51) Int. Cl.: G06F 17/60, G06F 17/30, H04N 5/222

(54) **SYSTEM AND METHOD FOR MANAGING DISTRIBUTION OF ADVERTISEMENT**

(30) Priority: 02.05.2001 JP 2001135112; 20.06.2001 WO PCT/JP01/05239
(71) Applicant: Dentsu Inc., Tokyo 105-7001 (JP)
(72) Inventor: IIJIMA, Akio, Setagaya-Ku, Tokyo 158-0092 (JP)
(74) Representative: Skone James, Robert Edmund
(86) International application number: PCT/JP2001/006800
(87) International publication number: WO 2002/091262

(57) **Abstract**

Disclose is an advertisement delivery/management system for delivering an advertisement according to priority on a viewer-by-viewer basis through a selected media, comprising advertisement delivery means for delivering advertisements to each of viewers, delivery management means for managing the advertisements to be delivered from the advertisement delivery means to each of the viewers, according to priority, and an advertisement database for storing respective digital advertisement data of the managed advertisements. The delivery management means includes advertisement verification means for verifying the particularity of each of the managed advertisements, and advertisement data change/update means for changing or updating the advertisement data stored in the advertisement database.

## Description

### FIELD OF THE INVENTION

The present invention relates to a system and method for delivering and managing advertisements using one or more delivery means.

The term "delivery" herein has a general meaning of transmitting or sending advertisement data to allow an advertisement to be displayed or run on a screen which are being watched by a viewer. The advertisement delivery/management system includes not only an advertisement delivery/management system for sending advertisement data from an advertisement server located out of home to a screen located at home, but also an advertisement delivery/management system for sending advertisement data from an advertisement server located at home to a screen located at home. The term "delivery" also encompasses a mode such that advertisement data is sent from a storage device, such as a hard disk incorporated in a receiver for a television, personal computer or the like, to a reproducing device in the receiver.

### BACKGROUND ART

There has been proposed an advertisement delivery/management system configured such that advertisements are handled separately from programs, and a given priority is set to each of the advertisements on a viewer-by-viewer basis to deliver the advertisements to respective viewers according to the priority.

Heretofore, advertisements to be watched through different media screens, such as a television screen, a personal computer screen and a mobile phone screen, have been delivered independently to the respective media screens, or have not been delivered in association with each other. The term "media" herein means: means for providing a broadcast, communication or information service using video, audio, image or picture, text, program or the like, and the term "media screen" herein means a screen for use in providing such a service.

In connection with the advance of communication hardware and software, accessible medias for viewers tend to increase and diversify more and more in future. For example, the evolution of broadband communications makes it possible to watch a motion picture through personal computers or portable phones as in televisions, or to allow the screen of a picture phone or a home electric appliance with a monitor to be effectively used as a new media.

### DISCLOSURE OF THE INVENTION

It is an object of the present invention to provide an advertisement delivery/management system capable of, instead of providing advertisements from a plurality of advertisement delivery means each associated with different medias independently, giving a weighting coefficient to each of the advertisements on a viewer-by-viewer basis, irrespective of the types of medias, to totally determine the priority in delivery of the advertisements, so that even if a viewer selects and accesses any one of the medias/advertisement delivery means, the accessed advertisement delivery means can deliver the advertisement determined in accordance with to the priority.

In order to achieve the above object, according to the present invention, there is provided an advertisement delivery/management system for delivering an advertisement according to priority on a viewer-by-viewer basis through a selected media. The advertisement delivery/management system comprises advertisement delivery means for delivering advertisements to each of viewers through the media, delivery management means for managing the advertisements to be delivered from the advertisement delivery means to each of the viewers, according to priority, and an advertisement database for storing respective digital advertisement data of the advertisements. The delivery management means includes advertisement verification means for verifying the particularity of each of the managed advertisements, and advertisement data change/update means for changing or updating the advertisement data stored in the advertisement database.

The present invention further provides a method for delivering an advertisement according to priority on a viewer-by-viewer basis from advertisement delivery means through a selected media. The method comprises the steps of delivering advertisements to each of viewers through the media, managing the advertisements to be delivered to each of the viewers, according to priority, and storing respective digital advertisement data of the managed advertisements. The managing step includes the steps of verifying the particularity of each of the managed advertisements, and changing or updating the advertisement data stored in the advertisement database.

The present invention further provides an advertisement delivery/management system for delivering an advertisement according to priority on a client-by-client basis through a selected media. The advertisement delivery/management system comprises advertisement-delivery priority management means for determining a priority-determining coefficient of an advertisement for a specific client, advertisement-authorization management means for determining an authorization coefficient of the advertisement for the specific client, and advertisement delivery means for delivering the advertisement to the client through the media, the advertisement delivery means being operable to determine an advertisement delivery schedule in accordance with the priority-determining coefficient determined by the advertisement-delivery priority management means and the authorization coefficient determined by the advertisement-authorization management means, and to deliver the advertisement to the client through the media in accordance with the determined advertisement delivery schedule.

The present invention further provides a method for delivering an advertisement according to priority on a client-by-client basis through a selected media. The method comprises the steps of determining a priority-determining coefficient of an advertisement for a specific client, determining an authorization coefficient of the advertisement for the specific client, determining an advertisement delivery schedule in accordance with the determined priority-determining coefficient and the determined authorization coefficient, and delivering the advertisement to the client through the media in accordance with the determined advertisement delivery schedule.

The present invention further provides an advertisement delivery/management system for delivering an advertisement according to priority on a client-by-client basis through a selected media. The advertisement delivery/management system comprises advertisement-designation detect means for detecting whether an advertisement frame designates a specific advertisement, designated-advertisement priority determination means for determining the priority of a designated advertisement when the designated-advertisement detect means detects one or more advertisement designations, spot-advertisement priority determination means for determining the priority of a spot advertisement when the advertisement-designation detect means detects no advertisement designation in the advertisement frame, and advertisement delivery means for delivering the advertisement to the client through the media in accordance with the authorization coefficient determined by the advertisement-authorization management means, and either one of the priorities determined by the designated-advertisement priority determination means and spot-advertisement priority determination means.

In the advertisement delivery/management system of the present invention, the particularity of the managed advertisement may be selected from the group consisting of a business category related to the managed advertisement, a product subject to the managed advertisement, and an advertiser of the managed advertisement. In this case, the advertisement verification means may be operable to verify whether the particularity fulfills the requirement of a program intended to insert the managed advertisement or the requirement of a currently accessing program provider.

If the particularity of the managed advertisement is a program or program type in which the insertion of a managed advertisement is rejected by an advertiser of the managed advertisement, the advertisement verification means may be operable to verify whether a program intended to insert the managed advertisement falls within the rejected program or program type.

If the particularity of the managed advertisement is the digital data form of the managed advertisement, the advertisement verification means may be operable to verify whether the advertisement delivery means has the digital data in a deliverable form.

If the particularity of the managed advertisement is the form of the digital data of the managed advertisement, and the advertisement verification means verifies that the advertisement delivery means has the digital data in a plurality of deliverable forms, the advertisement verification means may be operable to determine which digital data should be delivered.

If the particularity of the managed advertisement is a broadcast right granted to the managed advertisement, the advertisement verification means may be operable to verify whether the granted broadcast right covers the delivery condition of the advertisement delivery means, wherein the delivery condition includes at least one selected from the group consisting of delivery mode, period of delivery, area of delivery, subject of delivery, content of delivery service, time zone of delivery, and age restriction of viewers.

If the particularity of the managed advertisement is the run time of the digital data of the managed advertisement, the advertisement verification means may be operable to verify whether the run time falls within the range of the time-period of an advertisement frame intended to insert the managed advertisement.

In the advertisement delivery/management system of the present invention, the advertisement data change/update means may be optionally operable to change or update the advertisement data of the managed advertisement during each of the above verifications.

When the delivery management means judges that the delivery of the managed advertisement is to be authorized or unauthorized, in accordance with the result of the verification or determination from the advertisement verification means, the advertisement data change/update means may be operable to assign a given coefficient determined depending on the result of the judgment to each of the authorized and unauthorized advertisements as a weighting coefficient.

In the method of the present invention, the particularity of the managed advertisement may be selected from the group consisting of a business category related to the managed advertisement, a product subjected to the managed advertisement, and an advertiser of the managed advertisement. In this case, the verifying step may include verifying whether the particularity fulfills the requirement of a program intended to insert the managed advertisement or the requirement of a currently accessing program provider.

If the particularity of the managed advertisement is a program or program type in which the insertion of a managed advertisement is rejected by an advertiser of the managed advertisement, the verifying step may include verifying whether a program intended to insert the managed advertisement falls within the rejected program or program type.

If the particularity of the managed advertisement is the digital data form of the managed advertisement, the verifying step may include verifying whether the advertisement delivery means has the digital data in a deliverable form.

If the particularity of the managed advertisement is the digital data form of the managed advertisement, the verifying step may include, when the advertisement delivery means has the digital data in a plurality of deliverable forms, determining which digital data should be delivered.

If the particularity of the managed advertisement is a broadcast right granted to the managed advertisement, the verifying step may include verifying whether the granted broadcast right covers the delivery condition of the advertisement delivery means, wherein the delivery condition includes at least one selected from the group consisting of delivery mode, period of delivery, area of delivery, subject of delivery, content of delivery service, time zone of delivery, and age restriction of viewers.

If the particularity of the managed advertisement is the run time of the digital data of the managed advertisement, the verifying step may include verifying whether the run time falls within the range of the time-period of an advertisement frame intended to insert the managed advertisement.

In the method of the present invention, the changing or updating step may optionally include changing or updating the advertisement data of the managed advertisement during each of the verifications.

The changing or updating step may also includes, when the delivery of the managed advertisement is judged as authorized or unauthorized in accordance with the result of the verification or determination from the advertisement verification means, assigning a given coefficient determined depending on the result of the judgment to each of the authorized and unauthorized advertisements as a weighting coefficient.

### BRIEF DESCRIPTION OF THE DRAWINGS

FIG 1 is a schematic block diagram showing an advertisement delivery/management system according to one embodiment of the present invention.
FIG 2a is an explanatory flowchart of the operation of the advertisement delivery/management system in FIG 1.
FIG 2b is an explanatory flowchart of the operation of the advertisement delivery/management system in FIG 1.
FIG 3 is a schematic block diagram showing an advertisement delivery/management system according to another embodiment of the present invention.
FIG 4a is an explanatory flowchart of the operation of the advertisement delivery/management system in FIG 3.
FIG 4b is an explanatory flowchart of the operation of the advertisement delivery/management system in FIG 3.
FIG 4c is an explanatory flowchart of the operation of the advertisement delivery/management system in FIG 3.
FIG 4d is an explanatory flowchart of the operation of the advertisement delivery/management system in FIG 3.
FIG 4e is an explanatory flowchart of the operation of the advertisement delivery/management system in FIG 3.
FIG 4f is an explanatory flowchart of the operation of the advertisement delivery/management system in FIG 3.
FIG 4g is an explanatory flowchart of the operation of the advertisement delivery/management system in FIG 3.

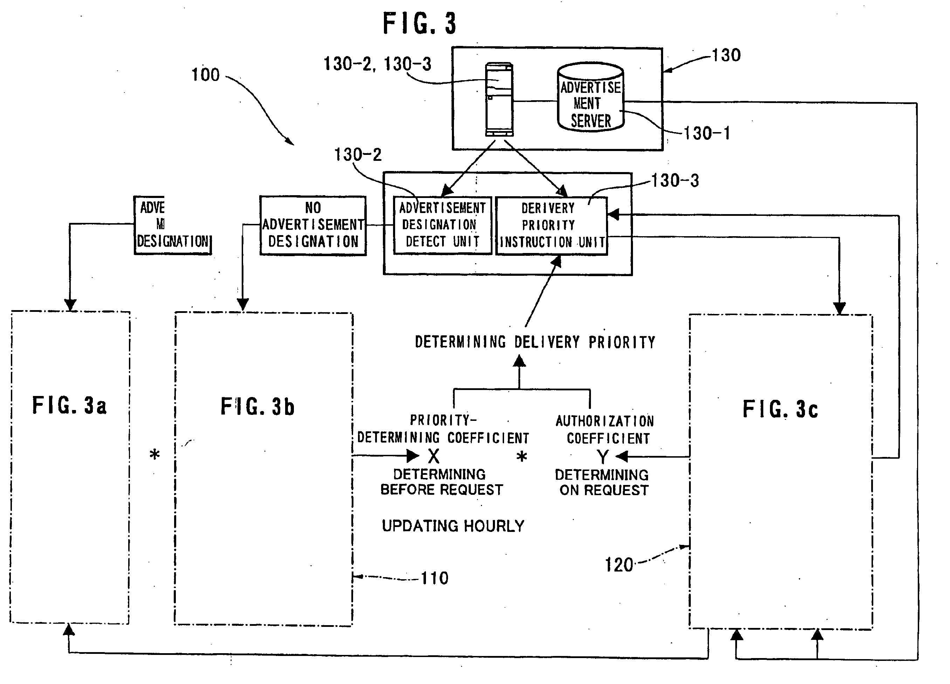

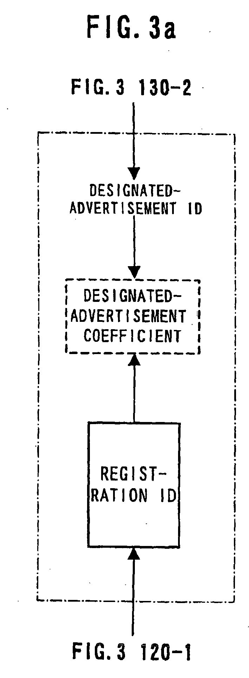

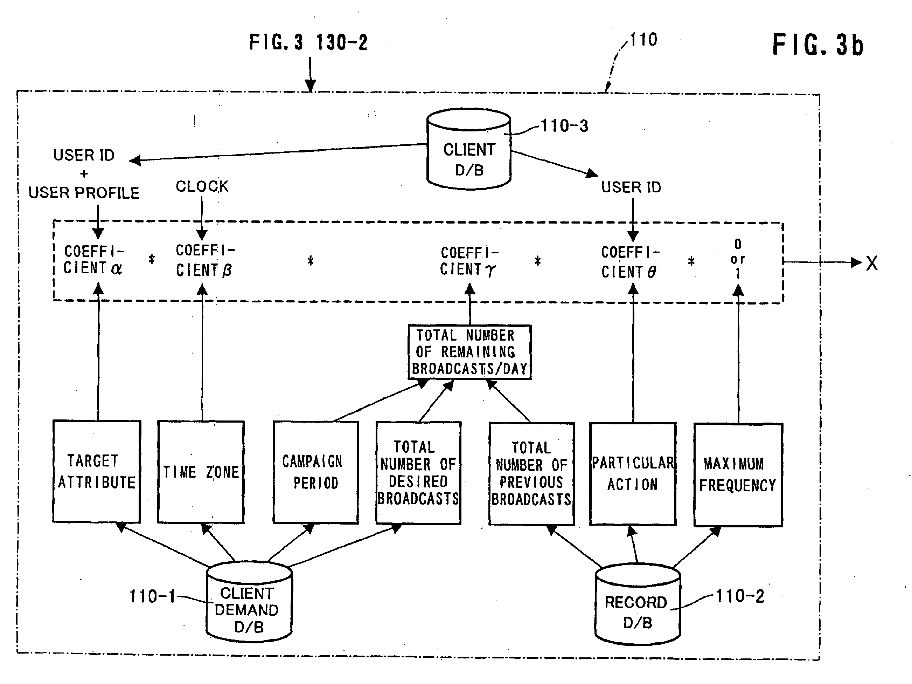

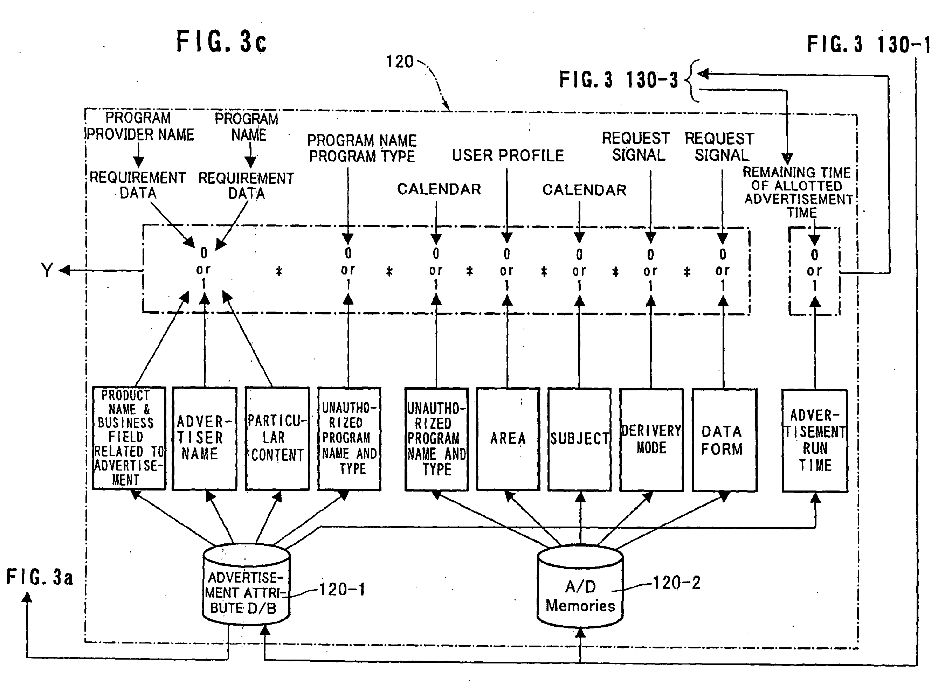

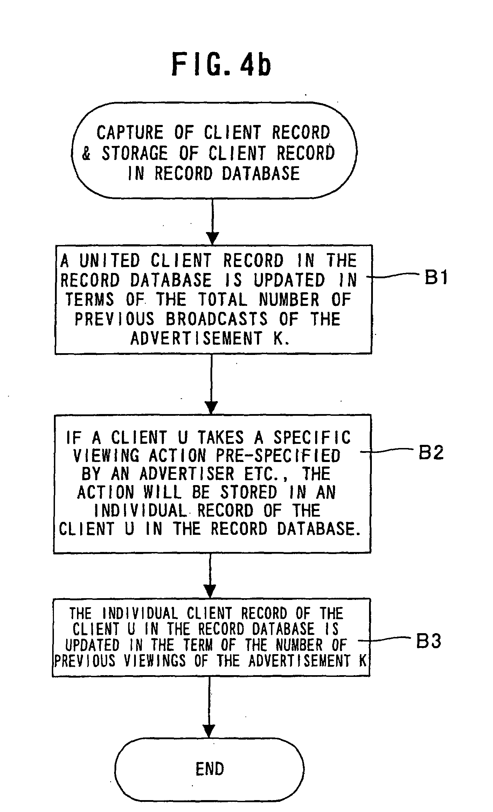

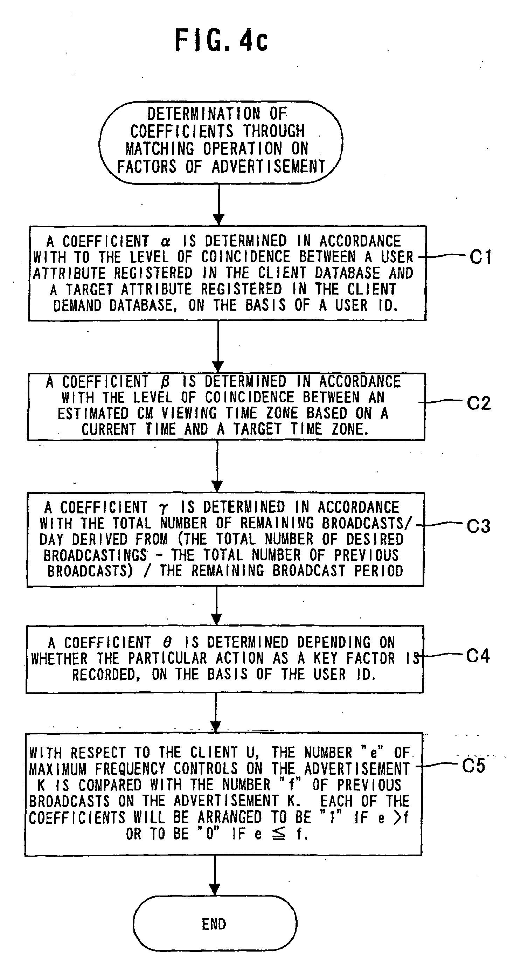

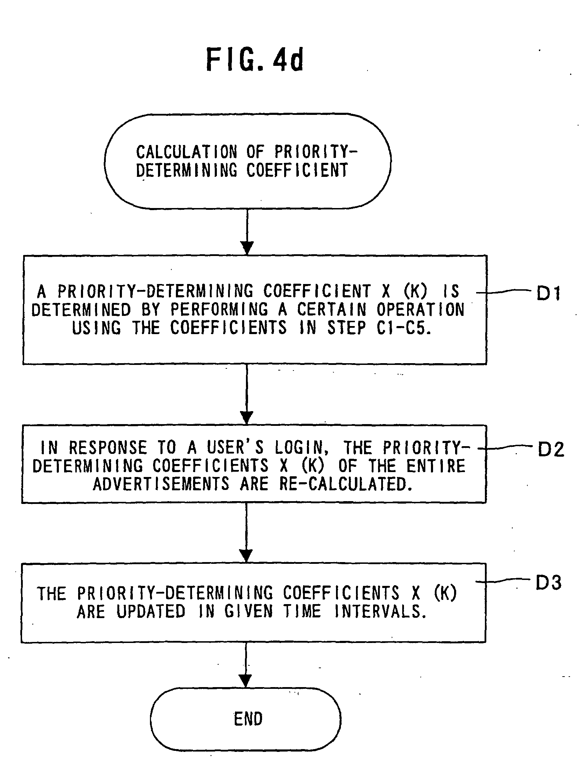

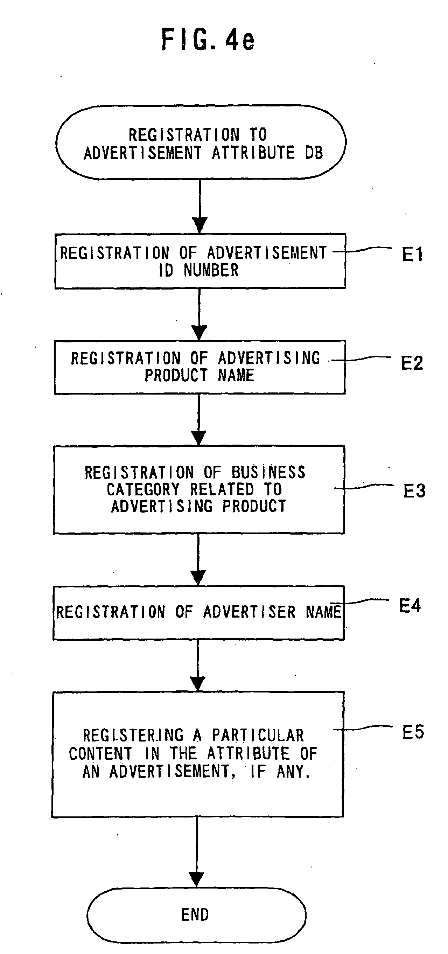

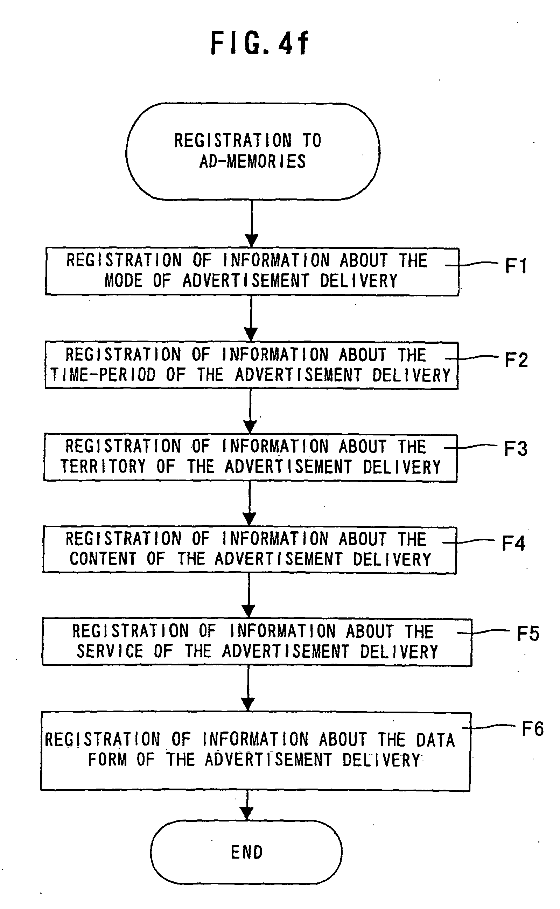

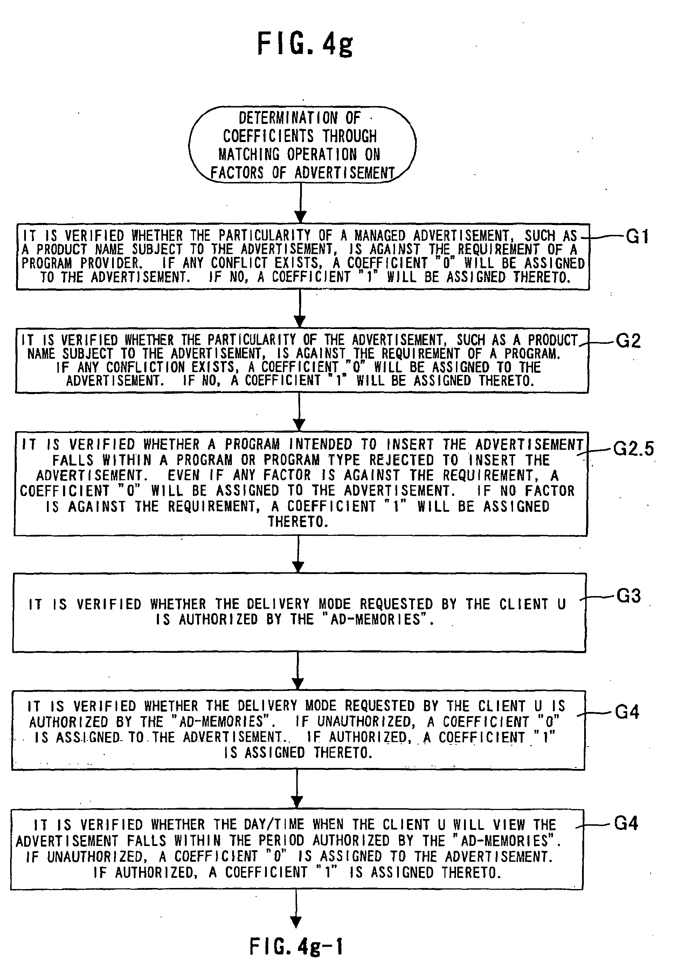

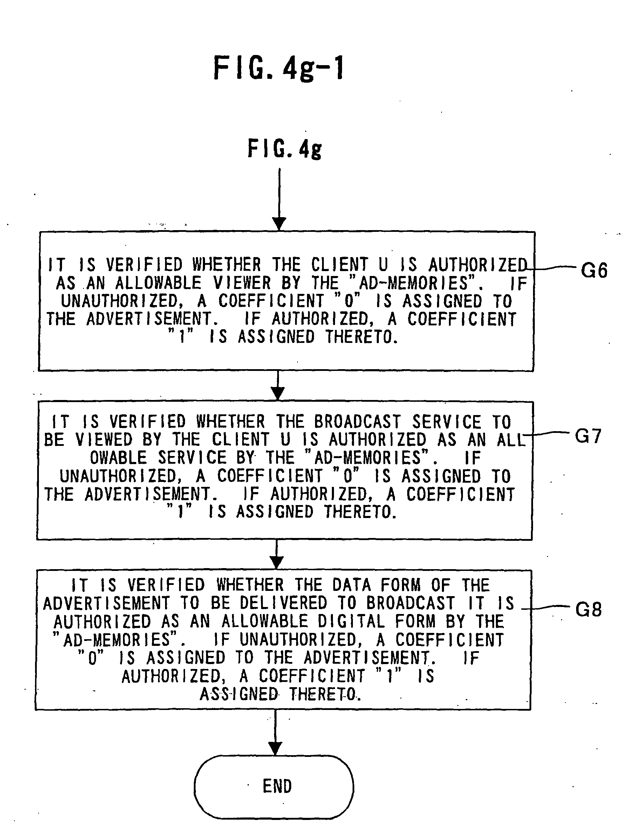

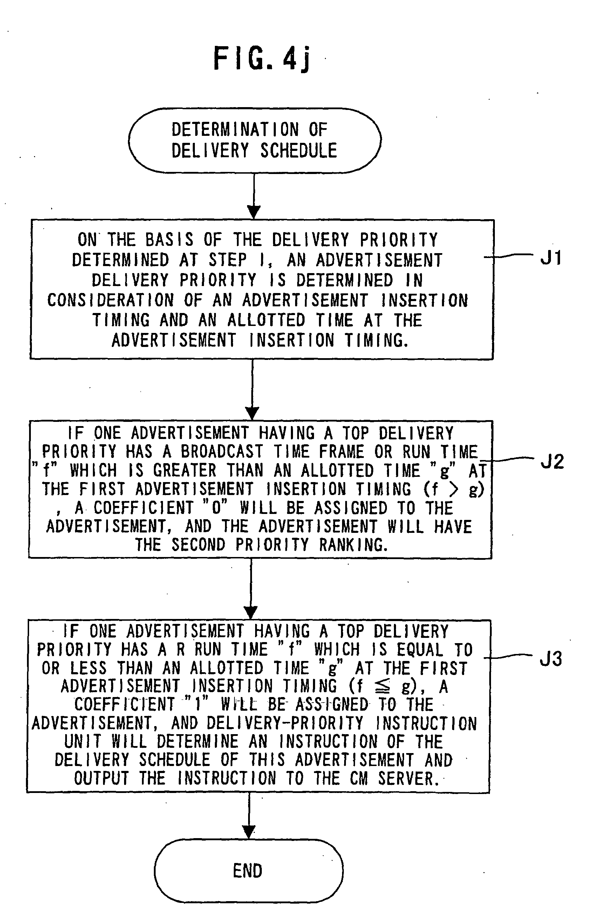

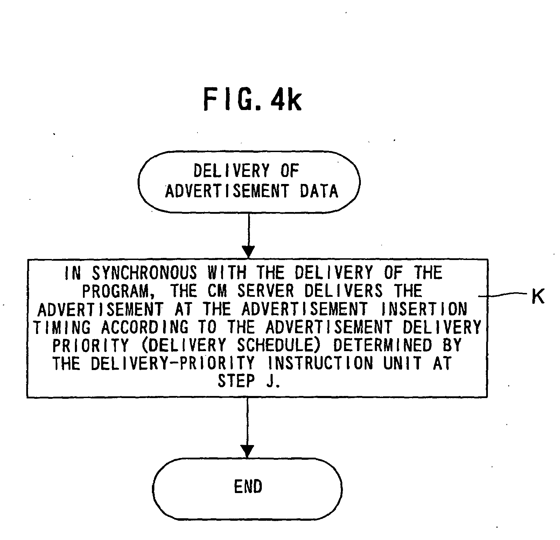

FIG. 4g-l is an explanatory flowchart of the operation of the advertisement delivery/management system in FIG. 3.

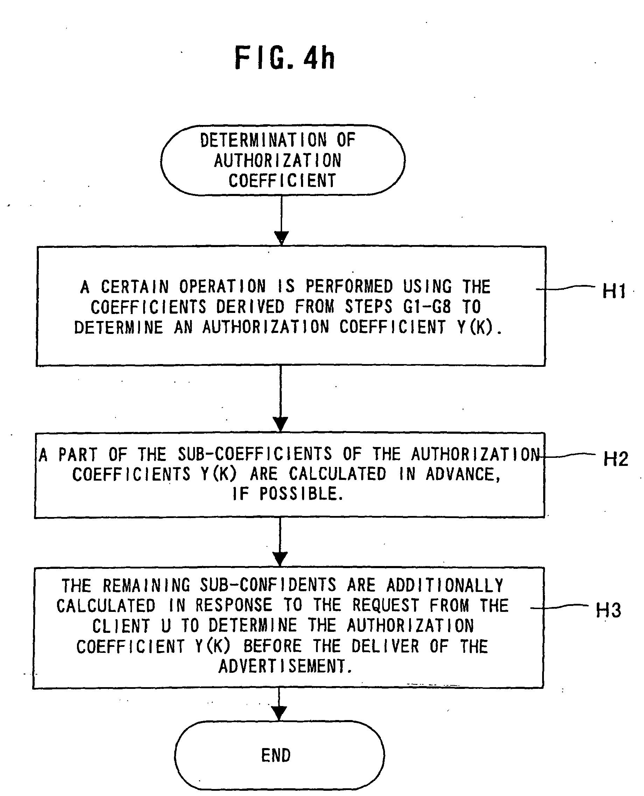

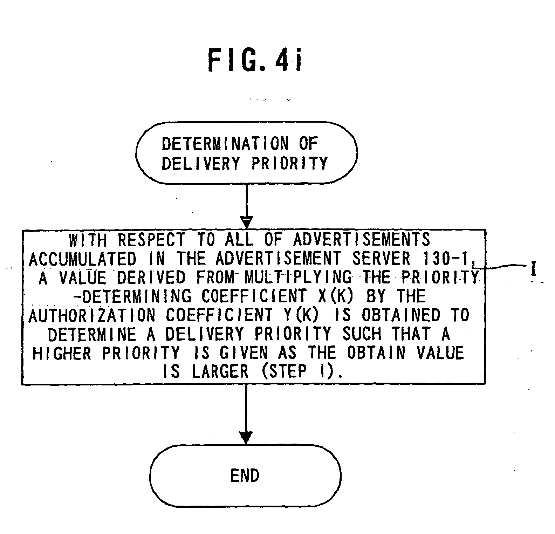

FIG 4h is an explanatory flowchart of the operation of the advertisement delivery/management system in FIG 3.
FIG 4i is an explanatory flowchart of the operation of the advertisement delivery/management system in FIG 3.
FIG 4j is an explanatory flowchart of the operation of the advertisement delivery/management system in FIG. 3.
FIG. 4k is an explanatory flowchart of the operation of the advertisement delivery/management system in FIG. 3.

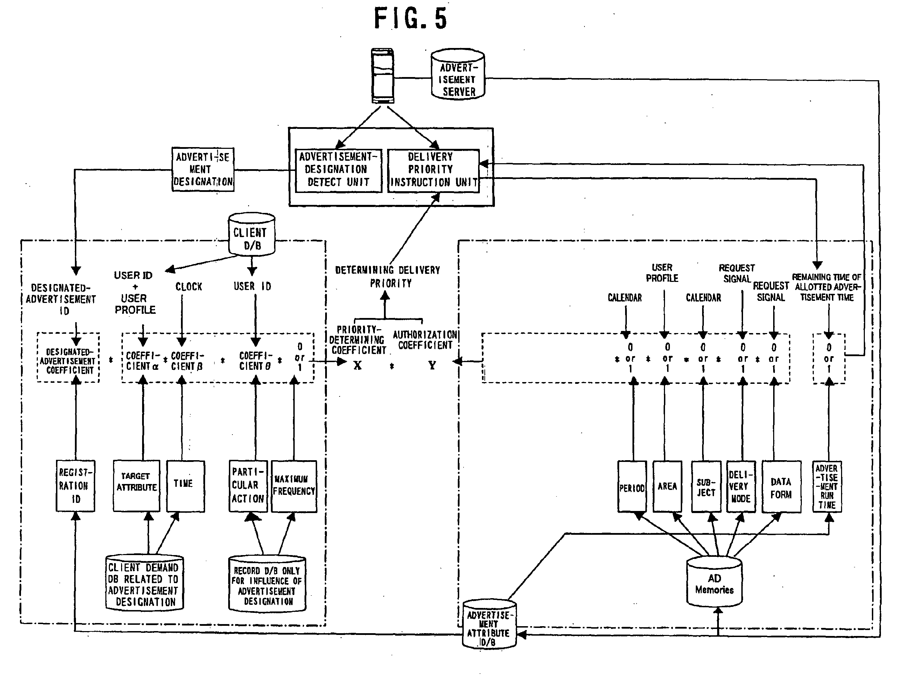

FIG 5 is an explanatory block diagram of the delivery of a designated advertisement in the advertisement delivery/management system in FIG 3.

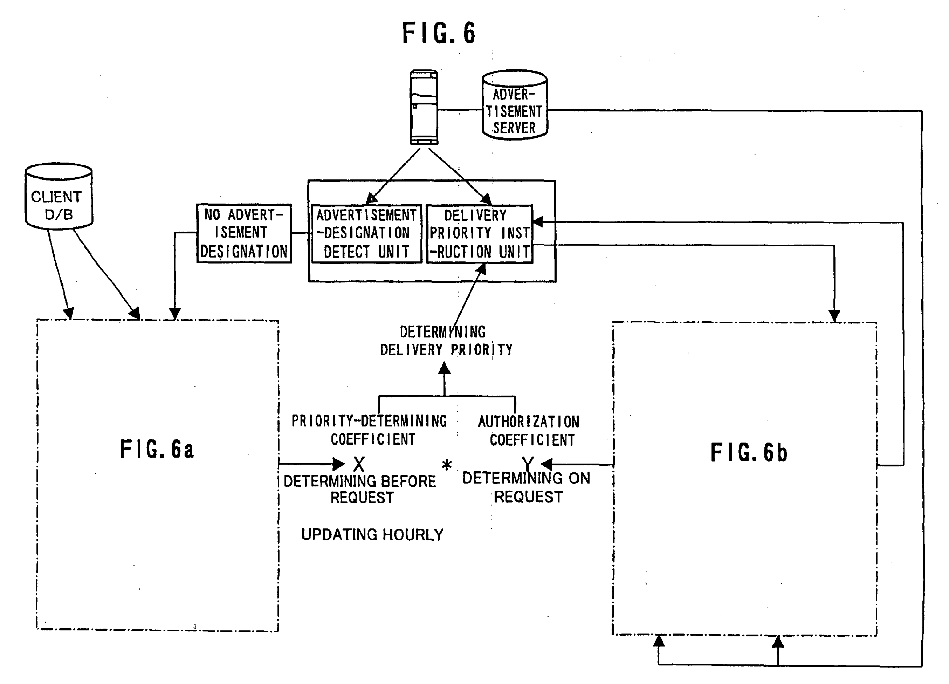

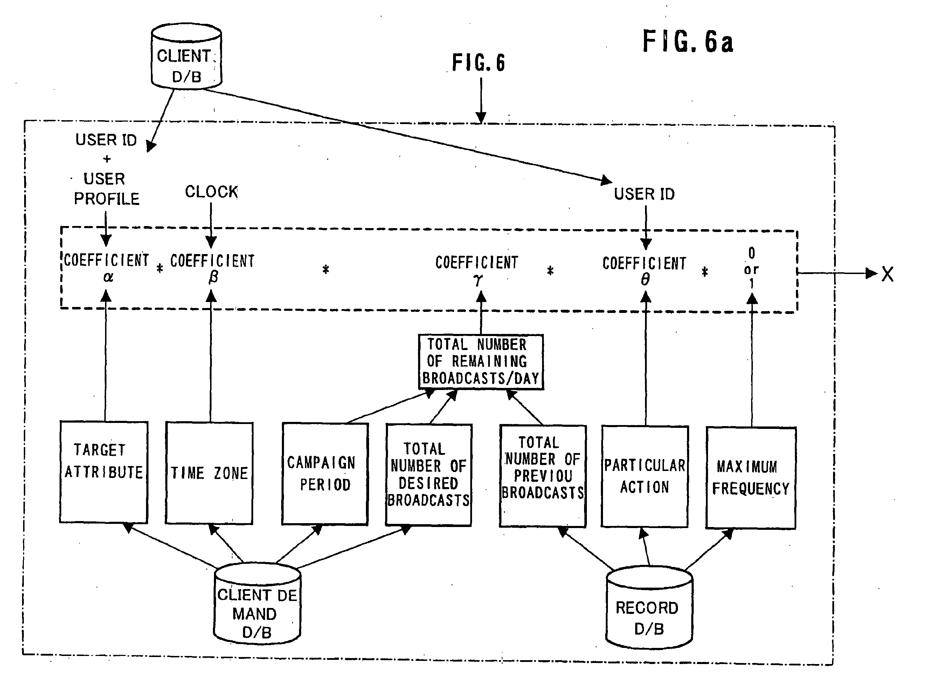

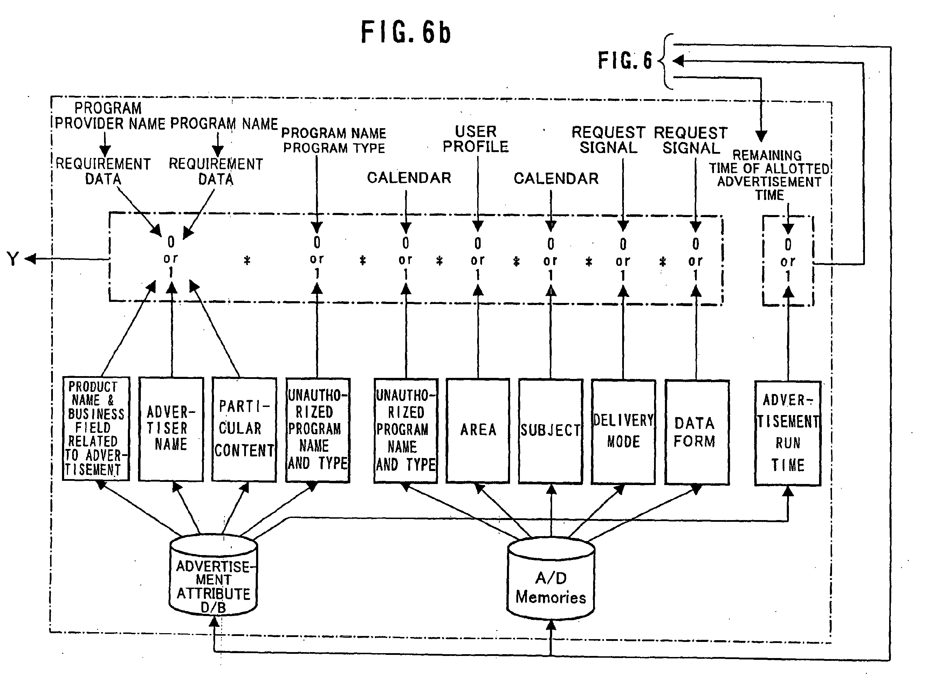

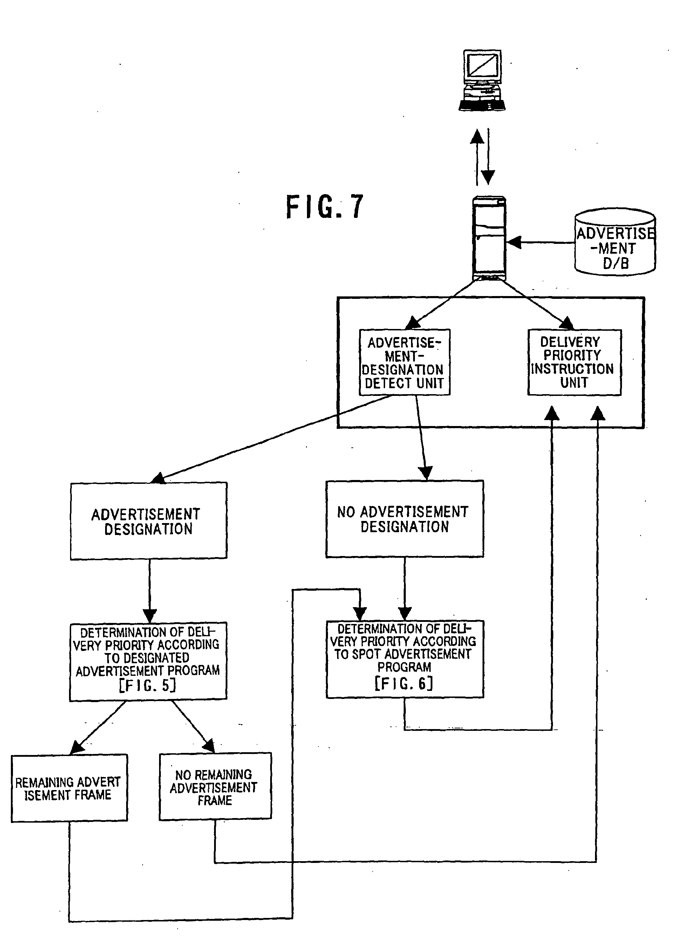

FIG. 6 is an explanatory block diagram of the delivery of a spot advertisement in the advertisement delivery/management system in FIG 3.
FIG. 7 is a schematic explanatory flowchart of the delivery of designated and spot advertisements in the advertisement delivery/management system in FIG 3.

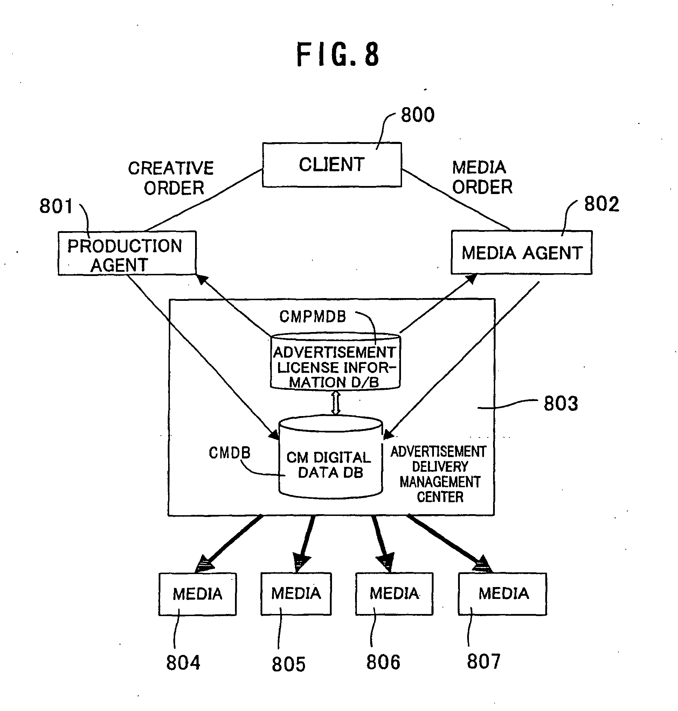

FIG 8 is a schematic block diagram showing another example of advertisement delivery using the advertisement delivery/management system in FIG 3.

### BEST MODE FOR CARRYING OUT THE INVENTION

With reference to the drawing, an advertisement delivery/management system and a method thereof according an embodiment of the present invention will now be described.

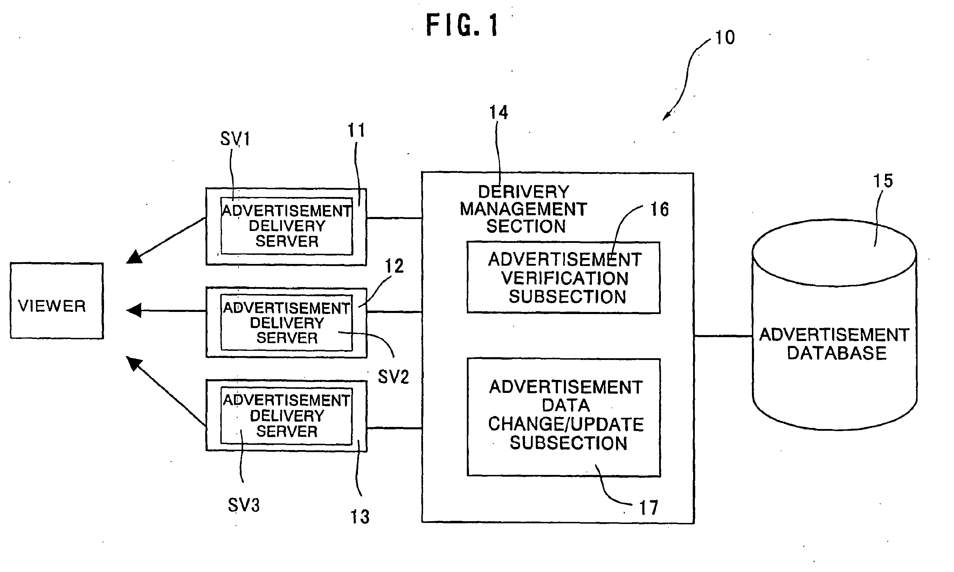

FIG. 1 is a schematic block diagram showing an advertisement delivery/management system according to one embodiment of the present invention.

The advertisement delivery/management system 10 in FIG 1 comprises: a plurality of advertisement delivery sections 11-13 each including an advertisement delivery server (hereinafter occasionally referred to as "delivery server") SV1-SV3; an delivery management section 14 for managing advertisements to allow them to be delivered to viewers according to priority, and an advertisement database 15 for storing digital advertisement data of the advertisements to be delivered from the advertisement delivery sections 11-13.

The delivery management section 14 as a critical part of the present invention includes an advertisement verification subsection 16 for verifying the following particularities of each of the advertisements to be delivered, and an advertisement data change/update subsection 17 for changing or updating the advertisement data stored in the advertisement database 15.

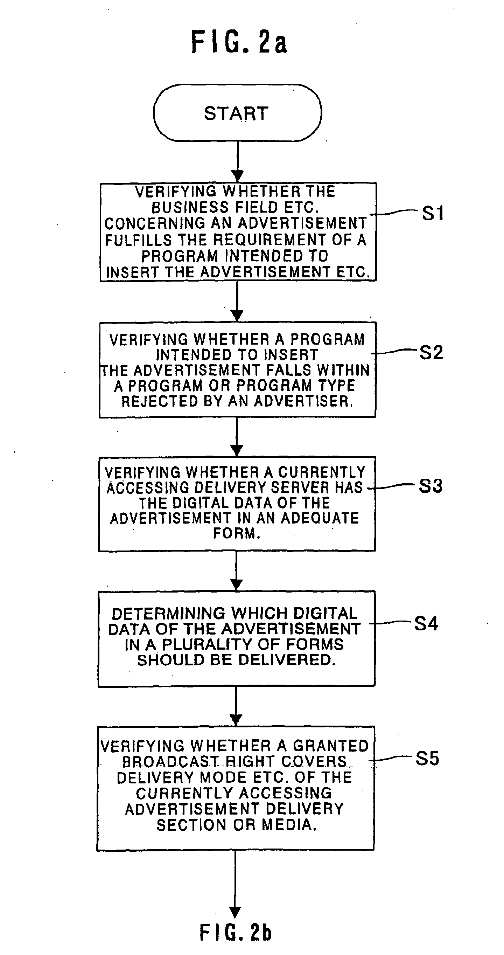

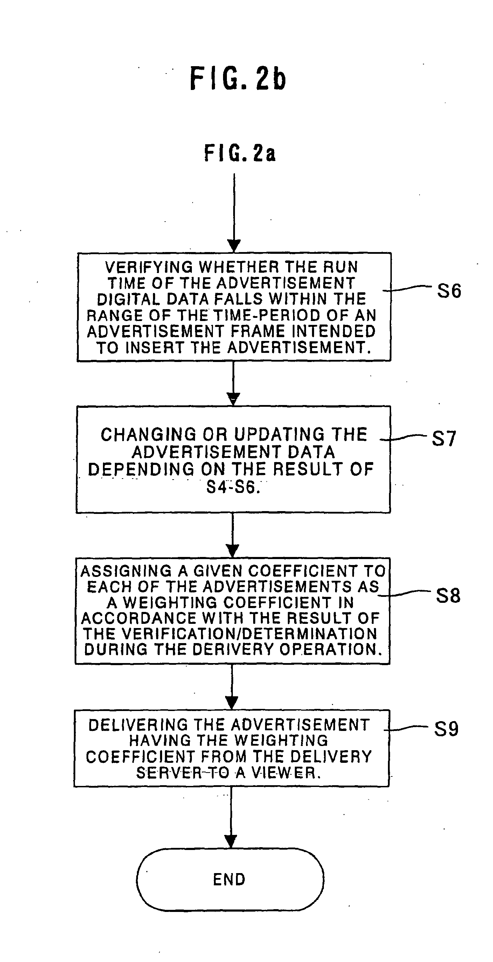

The operation of the delivery management section 14 as a critical part of the present invention will be described below with reference to flowcharts in FIG 2a and 2b.

The advertisement verification subsection 16 of the delivery management section 14 is operable to verify the following particularities.
[1] Verifying whether a "business category", "product" or "advertiser" concerning an advertisement which is in the preparatory stage for delivery on a priority basis (hereinafter referred to as "managed advertisement") fulfills the requirement of a "program intended to insert the managed advertisement" or the requirement of a "currently accessing program provider", for example whether the sponsor of a related program is a competitor (Step S1).
[2] Verifying whether a program intended to insert the managed advertisement falls within a program or program type to which an advertiser of the managed advertisement rejects the insertion of the managed advertisement (Step S2).
[3] Verifying whether the delivery server (either one of SV1 to SV3) of the currently accessing advertisement delivery section has the digital data of the managed advertisement in an adequate form (Step S3).
[4] Verifying whether the currently accessing advertisement delivery section has the digital data of the managed advertisement in a plurality of deliverable forms (format, data compression ratio, number of pixels, security function etc.). If YES, determining which digital data should be delivered (Step S4).
[5] Verifying whether a broadcast right granted to the managed advertisement covers the delivery condition of the currently accessing advertisement delivery section, wherein the delivery condition includes at least one selected from the group consisting of delivery mode, period of delivery, area of delivery, subject of delivery, content of delivery service, time zone of delivery, and age restriction of viewers (Step S5).
[6] Verifying whether the run time of the digital data of the managed advertisement falls within the range of the time-period of an advertisement frame intended to insert the managed advertisement (Step S6).

If it is determined that the advertisement data should be changed or updated, in the above verifications (4) to (6), the advertisement data change/update subsection will change or update the advertisement data of the managed advertisement (Step S7).

When the delivery management section judges that the delivery of the managed advertisement is to be authorized or unauthorized, in accordance with the result of the verification or determination from the advertisement verification subsection 16 during the delivery operation, the advertisement data change/update subsection assigns a given coefficient, specifically "0" (zero) for un-authorization and "1" for authorization, to each of the authorized and unauthorized advertisements as their weighting coefficient (Step S8).

Then, the delivery server (either one of SV1 to SV3) delivers the advertisement with the weighting coefficient to a viewer (Step S9).

The advertisement delivery/management system according to the above embodiment can verify and judge the compatibility of the managed advertisement in the delivery operation to manage the delivery of the digital data of the managed advertisement in conformity with the advertisement delivery section or media which is actually accessed by a viewer, in accordance with an advertisement list arranged in the order of priority on a viewer-by-viewer basis.

FIG 3 is a schematic block diagram showing an advertisement delivery/management system according to another embodiment of the present invention.

The advertisement delivery/management system 100 in Fig. 3 comprises an advertisement-delivery priority management section 110 configured to determine a priority-determining coefficient of a managed advertisement for a specific client, an advertisement-authorization management section 120 configured to determine an authorization coefficient of the managed advertisement for the specific client, and an advertisement delivery section 130 configured to determine a schedule for delivering the managed advertisement and deliver the advertisement to the specific client.

The advertisement-delivery priority management section 110 includes a client demand database 110-1, a record database 110-2, and a client database 110-3. The advertisement-authorization management section 120 includes an advertisement attribute database 120-1, and AD-Memories (advertisement-broadcast authorization- management database) 120-2. The advertisement delivery section 130 includes an advertisement server 130-1, a advertisement-designation detect unit 130-2, and a delivery-priority instruction unit 130-3

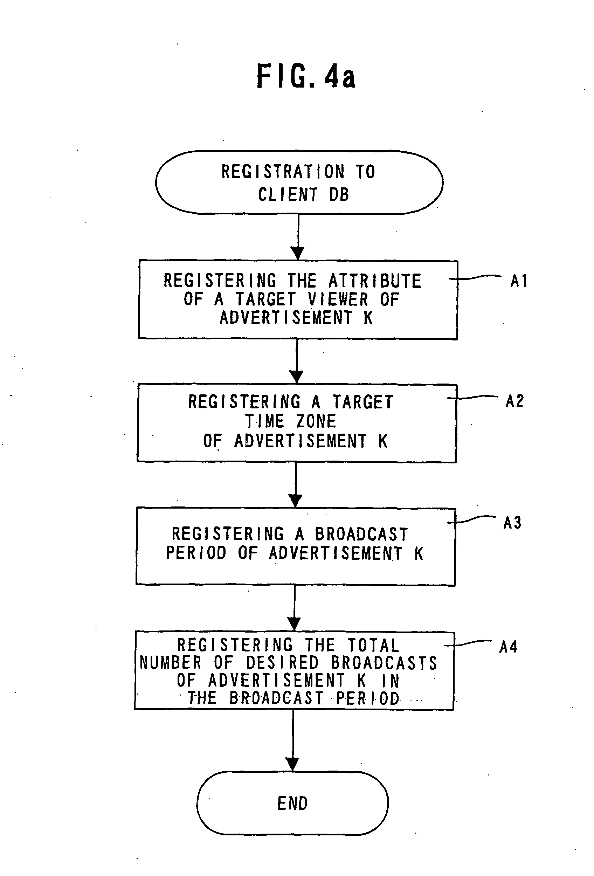

The operation of each components of the advertisement delivery/management system 100 in FIG 3 will be described below with reference to flowcharts of FIGS. 4a to 4k.

### 1. Advertisement-Delivery Priority Management Section 110

The advertisement-delivery priority management section 110 is configured to determine a coefficient X for determining the priority (or priority-determining coefficient) of a managed advertisement K for a user U, and to operate as follows.

### (A) Registration to Client Demand Database 110-1

The attribute (e.g. sexuality, age, residence, area of viewings, hobbies/diversions, or record of viewing on network and action) of a target viewer of the advertisement K is registered (Step A1), a target date/time zone or target weather of the advertisement K being registered (Step A2), a broadcast period of the advertisement K being registered (Step A3), and the total number of desired broadcasts of the advertisement K in the broadcast period being registered (Step A 4).

The record of viewing on network and action in Step A1 means that a client's demand, such as a demand for allowing the advertisement K to be viewed preferentially by a viewer who took a specific action in response to the viewing of a certain content, or a demand for allowing the advertisement K to be viewed preferentially by a viewer who has viewed a certain content several times (e.g. five times), can be registered to perform a weighting operation in terms of a viewer's action.

The date/time zone in Step A2 means that a weighting operation can be performed in terms of (1) date, (2) time zone or (3) combination of date and time zone, which is a desirable for broadcast to a target viewer.

For example, it can arranged to perform a weighting operation in terms of (1) date, to assign a weight to the end of month, holidays or the like, (2) time zone, to assign a weight to preparation hour for dinner or breakfast hour, or (3) the combination of date and time zone, to assign a weight to daytime on weekdays or nighttime just before holidays.

The weather in Step S2 means that a specific weather desirable for broadcast to a target viewer can be registered to assign a weight to the weather.

For example, two types of advertisements with different weightings may be prepared to replace them between dry and rainy regions.

### (B) Capture of Client Record & Storage of Client Record in Record Database

A united client record in the record database 110-2 is updated in terms of the total number of previous broadcasts of the advertisement K (Step B1). If a client U takes a specific viewing action (hereinafter referred to as "particular action") which is pre-specified as a key factor by an advertiser or the like, the particular action will be recorded in an individual record of the client U in the record database 110-2 (Step B2), and the individual client record of the client U in the record database 110-2 will also be updated in the term of the number of previous viewings of the advertisement K (Step B3).

### (C) Determination of Coefficients through Matching Operation on Factors of Advertisement

A coefficient α is determined in accordance with to the level of coincidence between a user attribute registered in the client database 110-3 and a target attribute registered in the client demand database, on the basis of a user ID (Step C1). A coefficient β is determined in accordance with to the level of coincidence between an estimated CM viewing time zone based on a current time and a target time zone (Step C2). The total number of remaining broadcasts/day is derived from (the total number of desired broadcastings - the total number of previous broadcasts) / the remaining broadcast period, and a coefficient y is determined in accordance with the derived total number of remaining broadcasts/day (Step C3). A coefficient θ is determined depending on whether the particular action as a key factor is recorded, on the basis of the user ID (Step C4). Then, with respect to the client U, the number "e" of the maximum frequency record of the advertisement K is compared with the number "f" of previous broadcasts of the advertisement K. If e > f, each of the above coefficients will be arranged to be "l". If e ≤ f, each of the coefficients will be arranged to be "0 (zero)" (Step C5).

### (D) Calculation of Priority-determining coefficient

A certain operation (e.g. multiplication in this embodiment) is performed using the coefficients in Step C1-C5 to determine a priority-determining coefficient X (K) (Step D1). Then, in response to a user's login, the priority-determining coefficients X (K) of the entire advertisements are re-calculated (Step D2), and updated in given time intervals (Step D3).

### 2. Advertisement-authorizing Management Section 120

The advertisement-authorizing management section 120 is configured to determining an authorization coefficient Y of the advertisement K for the client U, and to operate as follows.

### (E) Registration to Advertisement Attribute Database 120

An advertisement ID number is registered (Step E1), and a product name subject to a managed advertisement is registered (Step E2). A business category related to the advertising product is registered (Step E3), and an advertiser name is registered (Step E4). If the attribute of the advertisement includes any particular content, the particular content will be registered (Step E5).

### (F) Registration to Advertisement Broadcast Authorization Information Management Database "Ad-Memories" 120-2

For obtaining the authorization of advertisement delivery, information about the mode of the delivery, information about the time-period of the delivery, information about the area of the delivery, information about the subject of the delivery, information about the service of the delivery, and information about the data form of the delivery are registered at Step F1, F2, F3, F4, F5 and F6, respectively.

### (G) Determination of Coefficients through Matching Operation on Factors of advertisement

It is verified whether the particularity of a managed advertisement, such as a product name subject to the advertisement, a business category related to the advertisement or advertiser name, fulfills the requirement of a program provider. Even if any factor is against the requirement, a coefficient of 0 (zero) will be assigned to the advertisement. If no factor is against the requirement, a coefficient of 1 (one) will be assigned thereto (Step G1). It is also verified whether the particularity of the advertisement, such as a product name subject to the advertisement, a business category related to the advertisement or advertiser name, fulfills the requirement of a program. Even if any factor is against the requirement, a coefficient of 0 will be assigned to the advertisement. If no factor is against the requirement, a coefficient of 1 will be assigned thereto (Step G2). Further, it is verified whether a program intended to insert the advertisement falls within a program or program type rejected to insert the advertisement. Even if any factor is against the requirement, a coefficient of 0 will be assigned to the advertisement. If no factor is against the requirement, a coefficient of 1 will be assigned thereto (Step G2.5). Further, it is verified whether the delivery mode requested by the client U is authorized by the "Ad-Memories" 120-2. If unauthorized, a coefficient of 0 is assigned to the advertisement. If authorized, a coefficient of 1 is assigned thereto (Step G3). It is verified whether the day/time when the client U will view the advertisement falls within the period authorized by the "Ad-Memories" 120-2. If unauthorized, a coefficient of 0 is assigned to the advertisement. If authorized, a coefficient of 1 is assigned thereto (Step G4). It is verified whether the area where the client U will view the advertisement is authorized by the "Ad-Memories" 120-2. If unauthorized, a coefficient of 0 is assigned to the advertisement. If authorized, a coefficient of 1 is assigned thereto (Step G5). It is verified whether the client U is authorized as an allowable viewer by the "Ad-Memories" 120-2. If unauthorized, a coefficient of 0 is assigned to the advertisement. If authorized, a coefficient of 1 is assigned thereto (Step G6). It is verified whether the broadcast service to be viewed by the client U is authorized as an allowable service by the "Ad-Memories" 120-2. If unauthorized, a coefficient of 0 is assigned to the advertisement. If authorized, a coefficient of 1 is assigned thereto (Step G7). It is verified whether the data form of the advertisement to be delivered to broadcast it is authorized as an allowable digital form by the "Ad-Memories" 120-2. If unauthorized, a coefficient of 0 is assigned to the advertisement. If authorized, a coefficient of 1 is assigned thereto (Step G8).

### (H) Determination of Authorization Coefficient

A certain operation (e.g. multiplication in this embodiment) is performed using the coefficients derived from Steps G1-G8 to determine an authorization coefficient Y(K) (Step H1). If possible, a part of the sub-coefficients of the authorization coefficients Y(K) may be calculated in 'advance (Step H2). In this case, the remaining sub-coefficients may be additionally calculated in response to the request from the client U to determine the authorization coefficient Y(K) before the delivery of the advertisement (Step H3).

### 3. Advertisement Delivery Section 130

The advertisement delivery section 130 are configured to determine a delivery schedule of an advertisement for the client U, and to operate as follows.

### (I) Determination of Delivery Priority

With respect to all of advertisements accumulated in the advertisement server 130-1, a value derived from multiplying the priority-determining coefficient X(K) by the authorization coefficient Y(K) is obtained to determine a delivery priority such that a higher priority is given as the obtain value is larger (Step I).

### (J) Determination of Delivery Schedule

On the basis of the delivery priority determined at Step I, an advertisement delivery priority is determined in consideration of the timing of inserting the advertisement into a program to be watched by a client (advertisement insertion timing), and an allotted time at the advertisement insertion timing (Step J1).

Specifically, if one advertisement having a top delivery priority has a broadcast time frame or run time "f" (sec) which is greater than an allotted time "g" (sec) at the first advertisement insertion timing (f > g), a coefficient of 0 will be assigned to the advertisement, and the advertisement will have the second priority ranking (or a top priority ranking at the next advertisement insertion timing) (Step J2).

Otherwise, if one advertisement having a top delivery priority has a r run time "f" which is equal to or less than an allotted time "g" (sec) at the first advertisement insertion timing (f ≤ g), a coefficient of 1 will be assigned to the advertisement, and delivery-priority instruction unit 130-3 will determine an instruction of the delivery schedule of this advertisement and output the instruction to the CM server 130-1 (Step J3).

### K. Delivery of Advertisement Data

In synchronous with the delivery of the program, the CM server 130-1 delivers the advertisement at the advertisement insertion timing according to the advertisement delivery priority (delivery schedule) determined by the delivery-priority instruction unit 130-3 at Step J (Step K1).

### ADVERTISEMENT DELIVERY OF DESIGNATED ADVERTISEMENTS

With reference to FIGS. 5 to 7, another embodiment will be described below in which an advertisement to be delivered is designated.

It is assumed that an advertisement is designated in the following cases.
(i) Case where a specific advertisement is designated in each of contents
   For example, a case where a content has an advertisement contract made by a contents holder or the like.
(ii) Case where a specific advertisement is designated in each of advertisement frames
   For example, a case where one or more advertisement frames in a content including a plurality of advertisement frames have been separately sold.
(iii) Case where a specific advertisement is designated by a viewer
   For example, a case where a viewer uses a system allowing the user to designate a specific advertisement when he/she watches a content.

The process of determining the delivery priority when managed advertisements include a designated advertisement will be described below.
(a) A weighting operation is performed using a designated-advertisement coefficient allowing the priority of a set of designated advertisements to be positively increased.
(b) An additional weighting operation is performed using another coefficient representing target viewers, time zones, particular actions or the like to allow the respective priorities of the designated advertisements to be modified.
(c) A maximum frequency is determined in each of the designated advertisements to preclude them from being delivered beyond the maximum frequency.
(d) If specific advertisements are designated in a certain content, the designated advertisements are broadcasted in the advertisement frames of the content up to their maximum frequencies, and a spot advertisement is delivered to the remaining advertisement frames according the aforementioned process of determining the delivery priority.

Even if a viewer accesses any one of medias, advertisements can be delivered to the viewer according to a given priority determined under an integrative management to allow each of the advertisements to achieve the target number of viewings for the viewer.

In some cases, it is also required to deliver advertisements under the condition that an advertisement to be preferentially delivered is designated in a media currently accessed by a viewer, or a program, content or service provided from the media, and to deliver the advertisement in different priorities on a viewer-by-viewer basis.

Thus, in response to access of a viewer to a program, content or service having an advertisement frame, the advertisement-designation detect means 130-2 first detects whether advertisement frames of the program or the like designate a specific advertisement. If the advertisement frames designate one or more specific advertisements, a designated-advertisement coefficient will be given to the designated advertisements defined by a specific ID to allow them to specially have priority over other advertisements. Then, the priority of the designated advertisement will be determined in consideration of other circumstance or requirement.

If there is no advertisement designation, advertisements will be handled as a spot advertisement in accordance with the aforementioned priority determined under an integrative management.

Irrespective of the existence of the designated advertisement, it is required to verify the following particularly of a managed advertisement to be delivered according to priority, by advertisement verification means, in some cases.
(1) It is required to verify whether a business category, product or advertiser concerning a managed advertisement or an advertisement which is in the preparatory stage for delivery on a priority basis fulfills the requirement of a program intended to insert the managed advertisement or the requirement of a currently accessing program provider.
(2) It is required to verify whether an advertiser of the managed advertisement restricts to broadcast the managed advertisement in a program or service intended to insert the managed advertisement, or through a currently accessing program provider.
(3) It is required to verify whether the digital data of the managed advertisement exists in the currently accessing advertisement delivery means in as an adequate form.
(4) It is required to verify whether the currently accessing advertisement delivery means has the digital data of the managed advertisement in a plurality of forms. If YES, it is requited to determine which digital data should be delivered.
(5) It is required to verify whether a broadcast right granted to the managed advertisement covers the delivery condition of the currently accessing advertisement delivery means, wherein the delivery condition includes at least one selected from the group consisting of delivery mode, period of delivery, area of delivery, subject of delivery and content of delivery service.
(6) It is required to verify whether the run time of the digital data of the managed advertisement falls within the range of the time-period of an advertisement frame intended to insert the managed advertisement.

In response to the access to a program, content or service having an advertisement frame the advertisement-designation detect unit 130-2 detects whether the advertisement frame designates a specific advertisement, and instructs which of programs for advertisements including one or more designated advertisements and for advertisements including no designated advertisement should be used to calculate the priority.

An example will be described below in which an advertisement to be preferentially delivered is designated in a media currently accessed by a viewer, or a program, content or service provided from the media, and such an advertisement is delivered in different priorities on a viewer-by-viewer basis.

### EXAMPLE

An automobile company T sponsors a certain program A, and three advertisements for T company's cars (sporty type, luxury type and popular type) are designated.

Given that the T company made the following request on viewers watching the program A: "the advertisement for the sporty car should be watched two times by viewers of thirties or younger, the advertisement for the luxury car should be watched two times by viewers of forties or older, and the advertisement for the popular car should be watched once by entire generation."

A broadcast priority coefficient X is calculated according to the program for determining the delivery priority of designated advertisements.

A designated-advertisement coefficient of 100 is assigned to each of the three types of designated CMs to allow them to be delivered to the advertisement frames of the program A.

With respect to the sporty car CM, a target coefficient of 2 is set for viewers of thirties or younger, and a target coefficient of 0 is set for viewers of forties or older.

With respect to the luxury car CM, a target coefficient of 0 is set for viewers of thirties or younger, and a target coefficient of 2 is set for viewers of forties or older.

With respect to the popular car CM, a target coefficient of 1 is set for viewers of entire generation.

The weightings of the respective CMs to the viewers are calculated using the designated-advertisement coefficient × the target coefficient as shown in Table 1.

**Table 1**

| | Weight for Thirties or younger | Weight for Forties or older | Maximum frequency |
|---|---|---|---|
| Sporty car CM | 200 | 0 | 2 times |
| Luxury car CM | 0 | 200 | 2 times |
| Popular car CM | 100 | 100 | 1 time |

The broadcast priority coefficient is renewedly calculated every 15 minutes to determine the priority. In this way, the viewers of thirties or younger will watch the sporty car CM two times every 15 minutes and the popular car CM one time, and watch other CMs delivered in the remaining frames according to an after-mentioned program for determining the priority of spot advertisements.

The viewers of forties or older will watch the luxury car CM two times every 15 minutes and the popular car CM one time, and watch other CMs delivered in the remaining frames according to the after-mentioned program for determining the priority of spot advertisements.

### ADVERTISEMENT DELIVERY OF SPOT ADVERTISEMENTS

With reference to FIGS. 6 and 7, the advertisement delivery of spot advertisements will be described below.

Examples will be described below in which no advertisement to be preferentially delivered is designated in a media currently accessed by a viewer, or a program, content or service provided from the media, and the delivery priority is determined by verifying advertisements according to the advertisement verification means on the basis of the priority determined under the integrative management.

### [EXAMPLE of (1)]

For example, when a viewer α is watching a program sponsored by an automobile company T, the advertisement verification means verifies an advertisement for a car of company H which has a top priority, to deliver it to the remaining advertisement frame in the program. A business-category code of the car advertisement of the company H is verified with requirement data of the program. If the requirement includes a restriction that any advertisement related to the business field of automobile is not broadcasted except for that of the company T, a coefficient of 0 (zero) will be assigned to provide a broadcast-verification coefficient Y of 0 so as to suspend the delivery of the car advertisement of the company H.

The broadcast priority coefficient X of the car advertisement of the company H is maintained at the top priority. Thus, when the viewing for the viewer α is changed from the program sponsored by the company T to another program, the coefficient associated with the program requirement is returned to 1. Then, the car advertisement of the company H will be delivered if the broadcast-verification coefficient becomes 1 after the completion of other verifications.

### [EXAMPLE of (2)]

For example, when a viewer α is watching a program containing an atrocious scene conflicting with a regulation for preventing minors from viewing, the advertisement verification means verifies an advertisement I of an food manufacturer automobile company T which has a top priority, to deliver it to an advertisement frame in the program. A program type rejected to insert the advertisement I is verified with the type code of the program which is watched by the viewer. If the rejected program type is matched with the type code of the program, a coefficient of 0 (zero) will be assigned to provide a broadcast-verification coefficient Y of 0 so as to suspend the delivery of the advertisement I.

The broadcast priority coefficient X of the advertisement I is maintained at the top priority. Thus, when the program is changed to another program, and the new program is not matched with the rejected program type of the advertisement I, the broadcast-verification coefficient is returned to 1. Then, the advertisement I will be delivered if the broadcast-verification coefficient becomes 1 after the completion of other verifications.

### [EXAMPLE of (3)]

For example, when a viewer α is watching a Hi-Vision program for high resolution digital televisions through a television receiver at home, the advertisement verification means verifies an advertisement J having a top priority to deliver it to an advertisement frame in the program. If the delivery server of the advertisement delivery/management system for delivering the advertisement J to the television receiver does not have any digital data form of the advertisement J capable of being broadcasted in the High-Vision program, a coefficient of 0 (zero) will be assigned to provide a broadcast-verification coefficient Y of 0 so as to suspend the delivery of the advertisement I.

The broadcast priority coefficient X of the advertisement J is maintained at the top priority. Thus, when a viewer α watches another program from another media (when data delivery is performed by different formats, such medias are regarded as different herein even if they are received by the same television receiver), and the delivery server has the digital data form of the advertisement J compatible with the newly accessed media, the broadcast-verification coefficient is returned to 1. Then, the advertisement J will be delivered if the broadcast-verification coefficient becomes 1 after the completion of other verifications.

### [EXAMPLE of (4)]

For example, when a viewer α is watching a motion-picture program through a personal computer at home, the advertisement verification means verifies an advertisement K having a top priority to deliver it to an advertisement frame in the program. If the delivery server of the advertisement delivery/management system for delivering the advertisement J to the personal computer has a plurality of digital data different in data size (different in data compression ratio or screen size), one optimal digital data K-1 of the advertisement K will be selected in view of the status of a communication line linked to the personal computer or the screen size of the personal computer, and a coefficient of 0 (zero) will be assigned thereto. Then, the advertisement K will be delivered if the broadcast-verification coefficient becomes 1 after the completion of other verifications.

A coefficient of 0 is assigned to the remaining digital data of the advertisement K other than the digital data K-1, and excluded from the delivery operation.

In response to the delivery of the digital data K-1 to the viewer α, the broadcast record of the advertisement K is counted, and the broadcast priority coefficient of the advertisement K will be derived from a new calculation.

### [EXAMPLE of (5)]

For example, when a viewer α is accessing a certain media, the advertisement verification means verifies an advertisement L having a top priority to deliver it to an advertisement frame through the media. The advertisement verification means calls broadcast authorization information from the advertisement-broadcast authorization-information management database (=AD-Memories) to verify whether the conditions of delivery mode, period of broadcast, area/location of broadcast, subject/service of delivery in the advertisement delivery means for delivering the advertisement L is coved by the broadcast authorization information of the advertisement L. If all of the conditions are covered, a coefficient of 1 will be assigned to the advertisement L. If one or more of the conditions are not covered, a coefficient of 0 will be assigned to the advertisement L.

If the coefficient is 1, the advertisement K will be delivered if the broadcast-verification coefficient becomes 1 after the completion of other verifications.

The term "delivery mode" herein, for example, means whether it is performed by streaming or downloading; what kind of security function (copy protect, write protect etc) is included therein; or whether it is a pull type of calling an advertisement in accordance with user's own intention or a push type of broadcasting an advertisement independent of user's intention.

The term "period of delivery" herein means an acceptable period for delivering an advertisement (under the most tough condition), in view of the content of an advertisement, or an advertisement contract with a rightful claimant such as performers or music producers.

The term "area or location of delivery" herein means an acceptable area/location for delivering an advertisement to viewers (under the most tough condition), in view of the content of an advertisement, or an advertisement contract with a rightful claimant such as performers or music producers.

Particularly in the advertisement delivery to portable phones or automobile terminals, it is dynamically changed whether a portable phone or automobile terminal is located within the range covered by a broadcast right granted on an advertisement, depending on its current position.

The term "subject/service of delivery" means a flexible combination of the following matters: from what kind of the terminal of hardware, such as televisions, personal computers, portable phones, automobile terminals, picture phones or home electric appliances with monitors, a subject having therein an advertisement frame for presenting an advertisement to viewers is accessed; or in what kind of service, such as program on-demand broadcasts, program real-time broadcasts, communication services or information-providing services, the subject is arranged; and what kind of state, such as image quality, image size or presentation mode of advertisements, the advertisement is delivered.

### [EXAMPLE of (6)]

For example, when a viewer α is accessing a certain media, the advertisement verification means verifies an advertisement M having a top priority to deliver it to an advertisement frame through the media. If the advertisement M has a run time of 30 seconds but the advertisement frame intended to insert the advertisement M has a remaining time of only 15 seconds, a coefficient of 0 will be assigned to provide a broadcast-verification coefficient Y of 0 so as to suspend the delivery of the advertisement M.

If an advertisement N with the next priority to the advertisement M has a run time of 15 seconds, a coefficient of 1 will be assigned according to the run-time verification of the advertisement verification means, the advertisement N will be delivered if the broadcast-verification coefficient becomes 1 after the completion of other verifications. The broadcast priority coefficient X of the advertisement M is maintained at the top priority. Thus, if another advertisement frame in the next timing assures a remaining time of 30 seconds or more, the coefficient is returned to 1. Then, the advertisement M will be delivered if the broadcast-verification coefficient becomes 1 after the completion of other verifications.

According to the aforementioned advertisement delivery/management system and the method thereof, even if a viewer accesses a plurality of advertisement delivery means, advertisements can be delivered from one of the advertisement delivery means selected by the viewer, according to priority on a viewer-by-viewer basis.

With reference to FIG 8, an advertisement transaction using the advertisement delivery/management system will be described below, wherein a production agent and a media agent on advertisements are different from one another.

For example, when an agent (production agent) 801 which has produced an advertisement (CM) to be broadcasted through a media such as television, by a request from a client 800 is different from an agent (media agent) 802 which has mediated to sell a television advertisement frame for the CM, in response to an order from the client 800, the production agent 801 has the following roll/responsibility as a "CM producer": (1-1) quality control (digital processing, checkup) of the CM; (1-2) right management (right/license management) of the CM; and (1-3) storage/delivery management of the CM data. The media agent 802 has the following roll/responsibility as a "sales agent of media": (2-1) instruction to provide CM data to a media (seller of the advertisement frame); and (2-2) verification of the CM base data; (2-3) verification of broadcast record and report it to the client.

In order to carry out the above roll/responsibility, with respect to each of advertisements, the production agent 801 performs the following operations to an advertisement delivery management center 803 constituting the advertisement delivery/management system of the present invention: (1) registering the status of digitalization and delivery to a CM digital database CMDB constituting the advertisement-delivery management center 803, (2) registering license information such as upper limit number of uses to an advertisement license information database CMPMDB constituting an advertisement delivery management center 803, and (3) checking the record on transmission of the advertisement. With respect to the advertisement to be provided, the media agent 802 performs the following operations: (4) checking the status of stock with the reference to information pre-registered from the production agent 801 to the CM digital database CMDB of the advertisement-delivery management center 803, (5) checking the license information in the advertisement license information database CMPMDB of the advertisement delivery management center 803, and (6) checking the advertisement transmission record.

In addition to the above operations to the production agent 801 and the media agent 802, the advertisement delivery management center 803 performs the following operations using the advertisement license information database CMPMDB and the CM digital database CMDB: (7) executing an instruction of deleting the CM data after a predetermined period, (8) checking the authorized matter on CM data transmission, and (9) counting the CM transmission record.

As above, the advertisement-delivery management center 803 unifies information necessary for the production agent 801 and the media agent 802 in advertisement transaction, by the advertisement license information database CMPMDB.

Thus, the production agent 801 can avoid problems of the need for entrusting the digital processing of CM data to medias 804-807 or REP (not shown), or the difficulty in figuring out where the CM base data are located and how they are used. Further, the media agent 802 can avoid problems of the complexity of the instruction process to the medias, and the verification of broadcast record based on only trustful relation with medias.

The medias 804-807 required for new capital investment in broadband broadcasting can share the CM delivery facility with the medias and digitally transmit CM data through the shared CM delivery facility to reduce the CM delivery cost.

While the example in FIG 8 has explained the case where the client gives out an order individually to each of the production agent and the media agent, the advertisement delivery/management system of the present invention can also be applied to the case where either one of the production agent and the media agent receives an order from the client, and makes a request from the other in accordance with the order.

Further, while the example in FIG. 8 has shown four medias, the number of medias is not limited thereto, but may be one or any plural number.

In another embodiment of the present invention, the advertisement verification means may be configured to verify whether the granted broadcast right granted to a managed advertisement covers the delivery condition of the advertisement delivery means, including at least one selected from the group consisting of delivery mode, period of delivery, area of delivery, subject of delivery, content of delivery service, time zone of delivery, and age restriction of viewers. An example of this case will be described below.

A program with advertisements is broadcasted in the daytime zone, and the advertisement verification means verifies an advertisement having a top priority to deliver it. If the advertisement has a self-imposed control of broadcasting it only after 5 pm because it relates to an alcoholic beverage, zero is assigned as a broadcast-verification coefficient to suspend the delivery of the advertisement.

If a receiver (receiving set) at home has a function of discriminating a viewer, and a viewer is not of age, any advertisements related to alcoholic beverage, cigarette and consumer loans will be restricted to suspend their delivery.

The advertisement verification means may include two verification stages in the states (a) when an advertisement is accumulated in the advertisement delivery server, and (b) when an advertisement is delivered from the advertisement delivery server.

For example, in the above (1) and (2), when a program provider or a program is determined, the advertisement verification means verifies advertisements in advance to exclude incompatible advertisements from the advertisement list. However, the timing of verification performed at the determination of a program is approximately the same as that in the delivery operation.

In the above (3) and (4), the verification is performed in the delivery operation.

In the above (5), the delivery period and delivery area are verified in the accumulation operation, and the delivery mode, delivery subject, delivery service, delivery time/time zone, and viewer's age are verified in the delivery operation. However, if the receiver is a mobile terminal, the verification of the delivery area will be performed in the delivery operation.

In the above (6), the verification is performed in the delivery operation.

The present invention may be embodied in various configurations other than the aforementioned embodiments without departing from the spirit and scope thereof. Therefore, the aforementioned embodiments was chosen and described simply as examples of the present invention, and their description is not meant to be construed in a limiting sense. It is to be understood that the present invention is defined in the appended claims, but not necessarily limited to the specific description. It is also intended that legal equivalents of the claims are entirely encompassed within the scope of the present invention.

## Claims

1. An advertisement delivery/management system for delivering an advertisement according to priority on a viewer-by-viewer basis through a selected media, comprising:
advertisement delivery means for delivering advertisements to each of viewers through said media;
delivery management means for managing said advertisements to be delivered from said advertisement delivery means to each of said viewers, according to priority; and
an advertisement database for storing respective digital advertisement data of said managed advertisements,
wherein said delivery management means includes:
advertisement verification means for verifying the particularity of each of said managed advertisements; and
advertisement data change/update means for changing or updating said advertisement data stored in said advertisement database.

2. An advertisement delivery/management system as defined in claim 1, wherein said particularity of said managed advertisement is selected from the group consisting of a business category related to said managed advertisement, a product subject to said managed advertisement, and an advertiser of said managed advertisement, wherein said advertisement verification means is operable to verify whether said particularity fulfills the requirement of a program intended to insert said managed advertisement or the requirement of a currently accessing program provider.

3. An advertisement delivery/management system as defined in claim 1, wherein said particularity of said managed advertisement is a program or program type in which the insertion of a managed advertisement is rejected by an advertiser of said managed advertisement, wherein said advertisement verification means is operable to verify whether a program intended to insert said managed advertisement falls within said rejected program or program type.

4. An advertisement delivery/management system as defined in claim 1 or 2, wherein said particularity of said managed advertisement is the digital data form of said managed advertisement, wherein said advertisement verification means is operable to verify whether said advertisement delivery means has said digital data in a deliverable form.

5. An advertisement delivery/management system as defined in either one of claims 1 to 3, wherein said particularity of said managed advertisement is the digital data form of said managed advertisement, wherein when said advertisement verification means verifies that said advertisement delivery means has said digital data in a plurality of forms, said advertisement verification means is operable to determine which digital data should be delivered.

6. An advertisement delivery/management system as defined in either one of claims 1 to 5, wherein said particularity of said managed advertisement is a broadcast right granted to said managed advertisement, wherein said advertisement verification means is operable to verify whether said granted broadcast right covers the delivery condition of said advertisement delivery means, said delivery condition including at least one selected from the group consisting of delivery mode, period of delivery, area of delivery, subject of delivery, content of delivery service, time zone of delivery, and age restriction of viewers.

7. An advertisement delivery/management system as defined in either one of claims 1 to 6, wherein said particularity of said managed advertisement is the run time of the digital data of said managed advertisement, wherein said advertisement verification means is operable to verify whether said run time falls within the range of the time-period of an advertisement frame intended to insert said managed advertisement.

8. An advertisement delivery/management system as defined in either one of claims 2 to 7, wherein said advertisement data change/update means is optionally operable to change or update the advertisement data of said managed advertisement during said verification.

9. An advertisement delivery/management system as defined in either one of claims 1 to 8, wherein when said delivery management means judges that the delivery of said managed advertisement is to be authorized or unauthorized, in accordance with the result of said verification or determination from said advertisement verification means, said advertisement data change/update means is operable to assign a given coefficient determined depending on the result of said judgment to each of said authorized and unauthorized advertisements as a weighting coefficient.

10. A method for delivering an advertisement according to priority on a viewer-by-viewer basis from advertisement delivery means through a selected media, comprising the steps of:
delivering advertisements to each of viewers through said media;
managing said advertisement to be delivered to each of said viewers, according to a given priority; and
storing respective digital advertisement data of said advertisements,
wherein said managing step includes the steps of:
verifying the particularity of each of said managed advertisements; and
changing or updating said advertisement data stored in said advertisement database.

11. The method as defined in claim 10, wherein said particularity of said managed advertisement is selected from the group consisting of a business category related to said managed advertisement, a product subjected to said managed advertisement, and an advertiser of said managed advertisement, wherein said verifying step includes verifying whether said particularity fulfills the requirement of a program intended to insert said managed advertisement or the requirement of a currently accessing program provider.

12. The method as defined in claim 10 or 11, wherein said particularity of said managed advertisement is a program or program type in which the insertion of a managed advertisement is rejected by an advertiser of said managed advertisement, wherein said verifying step includes verifying whether a program intended to insert said managed advertisement falls within said rejected program or program type.

13. The method as defined in either one of claims 10 to 12, wherein said particularity of said managed advertisement is the digital data form of said managed advertisement, wherein said verifying step includes verifying whether said advertisement delivery means has said digital data in said deliverable form.

14. The method as defined in either one of claims 10 to 13, wherein said particularity of said managed advertisement is the digital data form of said managed advertisement, wherein said verifying step includes, when said advertisement delivery means has said digital data in a plurality of deliverable forms, determining which digital data should be delivered.

15. The method as defined in either one of claims 10 to 14, wherein said particularity of said managed advertisement is a broadcast right granted to said managed advertisement, wherein said verifying step includes verifying whether said granted broadcast right covers the delivery condition of said advertisement delivery means, said delivery condition including at least one selected from the group consisting of delivery mode, period of delivery, area of delivery, subject of delivery, content of delivery service, time zone of delivery, and age restriction of viewers.

16. The method as defined in either one of claims 10 to 15, wherein said particularity of said managed advertisement is the run time of the digital data of said managed advertisement, wherein said verifying step includes .verifying whether said run time falls within the range of the time-period of an advertisement frame intended to insert said managed advertisement.

17. The method as defined in either one of claims 11 to 16, wherein said changing or updating step includes changing or updating the advertisement data of said managed advertisement during said verification.

18. The method as defined in either one of claims 10 to 17, wherein said changing or updating step includes, when the delivery of said managed advertisement is judged as authorized or unauthorized in accordance with the result of said verification or determination from said advertisement verification means, assigning a given coefficient determined depending on the result of said judgment to each of said authorized and unauthorized advertisements as a weighting coefficient.

19. An advertisement delivery/management system for delivering an advertisement according to priority on a client-by-client basis through a selected media, comprising:
advertisement-delivery priority management means for determining a priority-determining coefficient of an advertisement for a specific client;
advertisement-authorization management means for determining an authorization coefficient of said advertisement for said specific client; and
advertisement delivery means for delivering said advertisement to said client through said media, said advertisement delivery means being operable to determine an advertisement delivery schedule in accordance with said priority-determining coefficient determined by said advertisement-delivery priority management means and said authorization coefficient determined by said advertisement-authorization management means, and to deliver said advertisement to said. client through said media in accordance with said determined advertisement delivery schedule.

20. A method for delivering an advertisement according to priority on a client-by-client basis through a selected media, comprising the steps of:
determining a priority-determining coefficient of an advertisement for a specific client;
determining an authorization coefficient of said advertisement for said specific client;
determining an advertisement delivery schedule in accordance with said determined priority-determining coefficient and said determined authorization coefficient, and delivering said advertisement to said client through said media in accordance with said determined advertisement delivery schedule.

21. An advertisement delivery/management system for delivering an advertisement according to priority on a client-by-client basis through a selected media, comprising:
advertisement-designation detect means for detecting whether an advertisement frame designates a specific advertisement;
designated-advertisement priority determination means for determining the priority of a designated advertisement when said designated-advertisement detect means detects one or more advertisement designations;
spot-advertisement priority determination means for determining the priority of a spot advertisement when said advertisement-designation detect means detects no advertisement designation in said advertisement frame; and
advertisement delivery means for delivering said advertisement to said client through said media in accordance with said authorization coefficient determined by said advertisement-authorization management means, and either one of the priorities determined by said designated-advertisement priority determination means and spot-advertisement priority determination means.
